# EUROPÄISCHE PATENTSCHRIFT

(11) **EP 2 689 615 B1**
(45) Veröffentlichungstag und Bekanntmachung des Hinweises auf die Patenterteilung: **28.09.2016**
(21) Anmeldenummer: 12710295.2
(22) Anmeldetag: 26.03.2012
(51) Int. Cl.: H04W 64/00, G01S 5/02, H04W 84/12

(54) **SYSTEM UND VERFAHREN ZUM FUNKBASIERTEN LOKALISIEREN EINES ENDGERÄTS**
SYSTEM AND METHOD FOR THE RADIO-BASED LOCALIZATION OF A TERMINAL
SYSTÈME ET PROCÉDÉ DE LOCALISATION RADIO D'UN TERMINAL

(30) Priorität: 25.03.2011 DE 102011006181
(43) Veröffentlichungstag der Anmeldung: 29.01.2014
(73) Patentinhaber: Vodafone Holding GmbH, 40213 Düsseldorf (DE)
(72) Erfinder: SCHUNK, Thorsten, 41379 Brüggen (DE)
(74) Vertreter: Jostarndt Patentanwalts-AG
(86) Internationale Anmeldenummer: PCT/EP2012/055346
(87) Internationale Veröffentlichungsnummer: WO 2012/130810

(56) Entgegenhaltungen:
- US-A1- 2005 078 626
- US-A1- 2008 130 604
- US-A1- 2010 298 008

## Beschreibung

Die Erfindung befasst sich mit der funkbasierten Lokalisierung von Endgeräten. Dabei betrifft die Erfindung ein System und ein Verfahren zum Lokalisieren eines Endgeräts mittels Funksignalen von Funkzugangspunkten, insbesondere Wifi-Zugangspunkten oder Funkzugangspunkten eines Mobilfunknetzes.

Zum Lokalisieren von mobilen Endgeräten, wie beispielsweise Smartphones, Notebookcomputern und anderen mobilen Kommunikationsendgeräten, sind eine Reihe von funkbasierten Messverfahren bekannt, mit denen die Position eines Endgeräts anhand von empfangenen Funksignalen approximativ bestimmt werden kann. Derartige Verfahren umfassen die Lokalisierung mittels des satellitengestützten GPS (Global Positioning System) oder ähnlicher Satellitennavigationssysteme. Darüber hinaus können in den Endgeräten empfangene Signale von Zugangspunkten zu Funknetzen zur Lokalisierung herangezogen werden. Derartige Verfahren werden hierin als funknetzbasierte Verfahren bezeichnet. Einige derartige Verfahren verwenden Basisstationen von Mobilfunknetzen, wie etwa von dem 3GPPP (3rd Generation Partnership Project) spezifizierten 2G-, 3G- oder 4G-Netzen, als Zugangspunkte. Bei weiteren Verfahren werden Funksignale von Wifi- bzw. WLAN (Wireless Local Area Network)-Zugangspunkten zur Lokalisierung von Endgeräten herangezogen (die Begriffe Wifi und WLAN werden hierin synonym verwendet).

Gegenüber der Lokalisierung mittels Satellitennavigationssystemen haben funknetzbasierte Verfahren bei entsprechender Abdeckung des Gebiets, in dem sich das zu lokalisierende Endgerät befindet, durch das Funknetz den Vorteil, dass die Lokalisierung auch innerhalb von Gebäuden, insbesondere Kaufhäusern, Einkaufszentren, Messehallen, Flughäfen und dergleichen, möglich ist, wo die Signale von Satellitennavigationssystemen oftmals nicht empfangen werden können. Zudem kann die Position des Endgeräts insbesondere in dicht bebauten Gebieten mit schlechten Empfangsbedingungen für Satellitensignale häufig genauer bestimmt werden, als mit dem GPS-System, welches derzeit das einzige nutzbare Satellitennavigationssystem ist.

Die zur Lokalisierung herangezogenen Funksignale können, insbesondere im Falle von Wifi-Funknetzen, so genannte Beacon-Signale sein, die von den Zugangspunkten in regelmäßigen Zeitabständen ausgesendet werden und eine dem jeweiligen Zugangspunkt eindeutig zugeordnete Kennung enthalten. Hierbei kann es sich im Falle eines Wifi-Zugangspunkts um eine BSSID (Basic Service Set Identification) des Zugangspunkts handeln, die einer eindeutigen MAC (Media Access Control)-Adresse des Zugangspunkts entspricht.

Funknetzbasierte Lokalisierungsverfahren können auf einer Lateration basieren. Hierbei wird die Position des Endgeräts als Schnittpunkt von drei Kreisen bestimmt, in deren Mittelpunkten sich jeweils ein Zugangspunkt befindet und deren Radien jeweils dem Abstand zu dem Zugangspunkt entsprechen. Die Positionen der Zugangspunkte werden vorab bestimmt und dienen als Eingangsgrößen für die Lateration. Eine Möglichkeit zur Bestimmung der Abstände zu den Zugangspunkten bieten so genannte RSS (Received Signal Strength)-Verfahren, bei denen der Abstand zu einem Zugangspunkt aus der vom Endgerät empfangenen Signalstärke eines Signals des Zugangspunkts unter Berücksichtigung einer Sendeleistung des Zugangspunkts bestimmt wird. Ungenauigkeiten in der Ortsbestimmung erwachsen bei dieser Art der Lateration insbesondere daraus, dass die Sendeleistung der Zugangspunkte in der Regel nicht genau bekannt ist, da nicht alle Zugangspunkte mit derselben Leistung senden, und dass Dämpfungen des Signals durch Objekte zwischen dem Zugangspunkt und dem Endgerät nicht berücksichtigt werden.

Als weitere funknetzbasierte Lokalisierungsmethoden können so genannte Mustererkennungsverfahren eingesetzt werden. Sie basieren auf dem Vergleich eines empfangenen Funksignalmusters, das die Signalstärken der empfangenen Funksignale verschiedener Funkzugangspunkte enthält, mit im Voraus erfassten Referenzsignalmustern. Als Position des Endgeräts kann bei den Mustererkennungsverfahren der Ort angenommen werden, an dem das Referenzmuster gemessen wurde, das die größte Übereinstimmung mit dem erfassten Signalmuster aufweist, oder die Position wird aus mehreren Referenzmustern mit hoher Übereinstimmung und den zugeordneten Positionen ermittelt, wodurch sich auch Positionen des Endgeräts zwischen den Erfassungsorten der Referenzmuster als Standorte ermitteln lassen.

Zur Erfassung der die funknetzbasierte Lokalisierung von Endgeräten herangezogenen Lokalisierungsinformationen können Messfahrten durchgeführt werden, bei denen mithilfe von Messfahrzeugen die Signalstärken der empfangenen Signale, die zugehörigen Kennungen der Funkzugangspunkte sowie die zugehörigen Positionen erfasst werden, die beispielsweise mittels des GPS bestimmt werden können. Bei diesem Vorgehen, das auch mit dem Begriff "Wardriving" bezeichnet wird, werden die Referenzsignalmuster und zugehörige Positionen direkt erfasst und können in einer Datenbank hinterlegt werden, auf die zur Bestimmung der Positionen von Endgeräten anhand einer Mustererkennung zugegriffen werden kann.

Hierbei besteht jedoch der Nachteil, dass die Verteilung von Funkzugangspunkten insbesondere in dicht besiedelten Gebieten mit einer hohen Anzahl von privat genutzten Funkzugangspunkten, insbesondere Wifi-Zugangspunkten, sich häufig verändert, da häufig neue Zugangspunkte installiert und bestehende Zugangspunkte entfernt werden und sich die Signalausbreitung auch für die Funksignale bestehender Zugangspunkte aufgrund von baulichen Änderungen verändern kann. Dies macht sehr häufige Messfahrten zur Datenpflege erforderlich, die jeweils mit einem erheblichen Aufwand verbunden sind. Änderungen mit noch höherer Dynamik, wie beispielsweise das Ein- und Ausschalten von Zugangspunkten durch ihre Nutzer, können anhand von Messfahrten im Prinzip überhaupt nicht berücksichtigt werden. Darüber hinaus sind zur Erfassung der Lokalisierungsinformationen in Innenräumen andere Lösungen erforderlich, insbesondere da hier oftmals kein Ortungssystem, wie GPS zur Verfügung steht.

Die Erfassung der Eingangsdaten für die Lokalisierung durch Lateration kann beispielsweise manuell erfolgen, indem Betreiber bzw. Nutzer von Funkzugangspunkten die Position ihrer Zugangspunkte und deren Kennungen angeben, die sodann in einer Datenbank hinterlegt werden. Hierbei besteht das Problem, dass die Angaben der Nutzer versehentlich oder vorsätzlich fehlerhaft sein können, und dass die Angabe von Veränderungen des Aufstellungsorts eines Zugangspunkts, etwa aufgrund eines Umzugs des Nutzers, oftmals vergessen wird, so dass eine fehlerhafte Datenbasis resultiert. Darüber hinaus ist die Erfassung von Änderungen des Betriebszustands von Funkzugangspunkten grundsätzlich zwar möglich, jedoch in der Praxis nicht zuverlässig durchführbar, da nicht sichergestellt werden kann, dass die Nutzer die Veränderungen des Betriebszustands jeweils angeben.

Darüber hinaus sind zur Durchführung einer Lateration mit hoher Genauigkeit genaue Angaben der Sendeleistungen der Funkzugangspunkte erforderlich. Deren Ermittlung verlangt von den Nutzern jedoch in der Regel überdurchschnittliche Kenntnisse der Technik der von ihnen eingesetzten Funkzugangspunkte. Daher kann eine Datenbasis, die anhand von manuellen Eingaben von Nutzern von Funkzugangspunkten erstellt wird, in der Regel nicht mit zuverlässigen Informationen über die Sendeleistungen der in der Datenbasis berücksichtigten Zugangspunkte ergänzt werden.

US 2010/0298008 A1 offenbart z.B. solche zuvor genannten Techniken zur Bestimmung der Position von Mobilstationen.

Es ist eine Aufgabe der vorliegenden Erfindung wenigstens einen der zuvor genannten Nachteile des Standes der Technik zu beseitigen und hierdurch die funknetzbasierte Lokalisierung von mobilen Endgeräten zu verbessern.

Die Aufgabe wird gelöst durch ein System nach Anspruch 1 und durch ein Verfahren nach Anspruch 14. Ausgestaltungen des Systems und des Verfahrens sind in den abhängigen Patentansprüchen angegeben.

Gemäß einem ersten Aspekt der Erfindung wird ein System zum Lokalisieren eines Endgeräts mithilfe von in dem Endgerät empfangenen Funksignalen von Funkzugangspunkten vorgeschlagen. Das System umfasst eine Einrichtung zum Bereitstellen von Lokalisierungsinformationen betreffend die Funksignale der Funkzugangspunkte, wobei die Lokalisierungsinformationen zur Lokalisierung des Endgeräts verwendbar sind. Weiterhin umfasst das System wenigstens einen ersten Funkzugangspunkt, der über eine Kommunikationsverbindung mit der Einrichtung verbunden und dazu eingerichtet ist, Angaben, die für Bestandteilte der Lokalisierungsinformationen repräsentativ sind, an die Einrichtung zu übermitteln.

Gemäß einem weiteren Aspekt der Erfindung wird ein Verfahren zum Erfassen von Lokalisierungsinformationen betreffend Funksignale von Funkzugangspunkten geschaffen. Die Lokalisierungsinformationen sind von einer Einrichtung bereitstellbar und zur Lokalisierung des Endgeräts mittels der Funksignale der Funkzugangspunkte verwendbar. Das Verfahren zeichnet sich dadurch aus, dass ein erster Funkzugangspunkt Angaben, die für Bestandteile der Lokalisierungsinformationen repräsentativ sind, über eine Kommunikationsverbindung an die Einrichtung übermittelt.

Die Erfindung ermöglicht damit, Lokalisierungsinformationen mithilfe von Funkzugangspunkten zu ermitteln, die sich im Gegensatz zu den beim Wardriving eingesetzten Messfahrzeugen im Wesentlichen dauerhaft am Erfassungsort befinden. Auf diese Weise können die Lokalisierungsinformationen insbesondere fortwährend aktuell gehalten werden. Darüber hinaus lassen sich aus den Funkzugangspunkten Konfigurationsparameter, wie die Sendeleistung, auslesen, die nicht ohne weiteres gemessen oder von einem Nutzer bzw. in anderer Weise von außen festgestellt werden können, beispielsweise da der Nutzer keinen Zugang zu dem Parameter besitzt und/oder dieser automatischen Anpassungen durch den Funkzugangspunkten unterliegt. Die Funkzugangspunkte verfügen in der Regel bereits über eine Netzwerkanbindung, die genutzt werden kann, um die Kommunikationsverbindung zu der die Lokalisierungsinformationen bereitstellenden Einrichtung herzustellen. Vorteilhaft erlaubt die Erfindung somit, eine bereits bestehende Infrastruktur für die Erfassung von Bestandteilen der Lokalisierungsinformationen bzw. von hierfür repräsentativen Angaben "mitzunutzen".

Die Funkzugangspunkte sind in einer Ausgestaltung als Wifi-Zugangspunkte ausgebildet, die insbesondere nach einem Standard der IEEE 802.11-Familie arbeiten. Die Funkzugangspunkte können beispielsweise von den Kunden eines Anbieters eines Datendienstes, auf den mittels der Funkzugangspunkte zugegriffen wird, in ihren Wohn- oder Geschäftsräumen betrieben werden. Gleichfalls kann es sich beispielsweise um Wifi-Zugangspunkte handeln, die an öffentlichen Orten betrieben werden. In einer weiteren Ausgestaltung handelt es sich um Funkzugangspunkte eines Mobilfunknetzes, beispielsweise eines 2G-, 3G- oder 4G-Mobilfunknetzes. Dabei kann es sich insbesondere um Funkzugangspunkte handeln, die so genannten Micro- oder Pico-Funkzellen erzeugen, die über eine relativ kleine räumliche Ausdehnung verfügen. Solche Funkzugangspunkte können untere anderem ähnlich wie Wifi-Zugangspunkte in Wohn- oder Geschäftsräumen oder lokal an bestimmten öffentlichen Orten betrieben werden, die ansonsten über keine hinreichende Abdeckung durch ein Mobilfunknetz verfügen. Die Erfindung ist jedoch keineswegs auf derartige Micro- oder Pico-Funkzellen beschränkt, sondern es können grundsätzlich jegliche Funkzugangspunkte von Mobilfunknetzen eingesetzt werden.

Angaben, die für Bestandteile der Lokalisierungsinformationen, wie beispielsweise die Sendeleistung oder Signalstärken, repräsentativ sind, können insbesondere die entsprechenden Bestandteile der Lokalisierungsinformationen selbst umfassen, oder sie umfassen Angaben, aus denen sich die die Bestandteile der Lokalisierungsinformationen ermitteln lassen. Unter Bestandteilen der Lokalisierungsinformationen sind insbesondere beliebige von den Lokalisierungsinformationen umfasste Datenelemente zu verstehen.

Die Lokalisierungsinformationen umfassen Signalmusterinformationen, welche eine empfangene Signalstärke eines Signals wenigstens eines anderen Funkzugangspunkts und/oder eine empfangene Kennung des anderen Funkzugangspunkts enthalten, und dass der erste Funkzugangspunkt dazu eingerichtet ist, die Signalmusterinformationen zu erfassen und an die Einrichtung zu übermitteln. Auf diese Weise können die Funkzugangspunkte als Messeinrichtung für die Erfassung von Referenzsignalmusterinformationen eingesetzt werden, die für eine Lokalisierung anhand einer Mustererkennung herangezogen werden können.

Zur Erfassung der Signalmusterinformationen kann die bestehende Hardware eines Funkzugangspunkts, wie beispielsweise die vorhandene Antenne und vorhandene Prozessoreinrichtungen zur Auswertung von über die Antenne empfangenen Signalen, verwendet werden. Allerdings können Funkzugangspunkte oftmals nicht gleichzeitig als Zugangspunkte zu einem Kommunikationsnetz betrieben werden und Funksignale anderer Funkzugangspunkte empfangen und auswerten. Eine Ausgestaltung des Systems und des Verfahrens sieht daher vor, dass der erste Funkzugangspunkt in einem ersten Betriebsmodus betreibbar ist, in dem er als Zugangspunkt zu einem Kommunikationsnetz dient, und dass der erste Funkzugangspunkt in einem zweiten Betriebsmodus betreibbar ist, in dem die Signalmusterinformationen erfassbar sind.

In einer Ausführungsform des Systems und des Verfahrens ist vorgesehen, dass die Lokalisierungsinformationen Informationen über eine Sendeleistung des ersten Funkzugangspunkt enthalten und dass der erste Funkzugangspunkt dazu eingerichtet ist, eine Angabe, die repräsentativ für die Sendeleistung des Funkzugangspunkts ist, an die Einrichtung zu übermitteln. Unter Heranziehung der in dieser Weise ermittelten tatsächlichen Sendeleistungen von Funkzugangspunkten kann eine Lokalisierung eines Endgeräts mittels Lateration mit hoher Genauigkeit durchgeführt werden. Die Sendeleistung ist dabei, wie zuvor erwähnt, ein Konfigurationsparameter, der durch Messungen im Prinzip nicht zu ermitteln ist und nicht ohne weiteres von einem Nutzer oder Betreiber festgestellt werden kann. Über die vorgeschlagene Kommunikationsverbindung zwischen einem Funkzugangspunkt und der die Lokalisierungsinformationen bereitstellenden Einrichtung kann die Sendeleistung bzw. eine hierfür repräsentative Angabe jedoch in einfacher Weise ausgelesen und für die Lokalisierung verfügbar gemacht werden.

Um fortwährend aktuelle Lokalisierungsinformationen für die Lokalisierung von Endgeräten bereitstellen zu können, beinhaltet eine Ausgestaltung des Systems und des Verfahrens, dass der erste Funkzugangspunkt dazu ausgestaltet ist, die Signalmusterinformationen und/oder die für die Sendeleistung repräsentativen Angaben in vorgegebenen, insbesondere regelmäßigen Zeitabständen an die Einrichtung zu melden. In dieser Ausgestaltung können fortwährend aktuelle Lokalisierungsinformationen ermittelt und bei einer durchzuführenden Lokalisierung eines Endgeräts rasch und zuverlässig bereitgestellt werden.

Eine weitere Ausgestaltung zeichnet sich dadurch aus, dass der erste Funkzugangspunkt dazu ausgestaltet ist, die Signalmusterinformationen und/oder die für die Sendeleistung repräsentativen Angaben aufgrund einer Aufforderung der Einrichtung an die Einrichtung zu übermitteln. Eine verbundene Ausführungsform sieht vor, dass die Einrichtung dazu ausgestaltet ist, die Aufforderung aufgrund einer durchzuführenden Lokalisierung eines Endgeräts an den ersten Funkzugangspunkt zu übermitteln. Im Vergleich zu einer regelmäßigen Übermittelung der Bestandteile der Lokalisierungsinformationen bzw. der hierfür repräsentativen Angaben kann hierdurch in der Regel das Datenübermittelungsaufkommen zwischen den Funkzugangspunkten und der Einrichtung insgesamt verringert werden, da die Funksignale einer hohen Anzahl von Funkzugangspunkten in der Regel nicht sehr häufig für die Lokalisierung von Endgeräten herangezogen werden.

Wie eingangs erläutert, werden für die funknetzbasierte Lokalisierung anhand einer Mustererkennung auch die Positionen herangezogen, an denen die Referenzsignalmuster erfasst werden. Dies sind vorliegend die Positionen der die Signalmusterinformationen erfassenden Funkzugangspunkte. Bei einer Lokalisierung anhand einer Lateration werden die Positionen der in Betracht gezogenen Funkzugangspunkte herangezogen. Daher ist in einer Ausführungsform des Verfahrens und des Systems vorgesehen, dass die Lokalisierungsinformationen zusätzlich eine Angabe der Position des ersten Funkzugangspunkts umfassen.

Die Positionen der Funkzugangspunkte können grundsätzlich auf verschiedene Weise erfasst werden. Beispielsweise können die Positionen von den Nutzern bzw. Betreibern der Funkzugangspunkte mitgeteilt bzw. ermittelt werden. Insbesondere in Bezug auf Funkzugangspunkte, die von Kunden eines Anbieters betrieben werden, sieht eine Ausgestaltung des Systems und des Verfahrens vor, dass Positionsangabe aus einer Adresse eines Nutzers des ersten Funkzugangspunkts ermittelt wird, wobei die Adresse aus einer Nutzerdatenbank ausgelesen wird. Auf diese Weise kann insbesondere ein Anbieter eines Datendienstes, auf den Kunden mithilfe von Funkzugangspunkten zugreifen, die Positionen der Funkzugangspunkte auf einfache Weise ermitteln.

Darüber hinaus ist eine Ausführungsform des Systems und des Verfahrens dadurch gekennzeichnet, dass die für Bestandteile der Lokalisierungsinformationen repräsentativen Angaben zumindest teilweise mittels eines Fernwartungsprotokolls von dem Funkzugangspunkt an die Einrichtung übermittelt werden. Dabei ist die Verwendung eines Fernwartungsprotokolls insbesondere zur Übermittlung von Konfigurationsparametern eines Funkzugangspunkts, wie beispielsweise einer für die Sendeleistung repräsentativen Angabe und/oder einer Kennung des Funkzugangspunkts (ggf. zusammen mit der Angabe über die Sendeleistung), zweckmäßig, da Fernwartungsprotokolle in der Regel bereits die Übertragung derartiger Parameter ermöglichen. Darüber hinaus bieten Fernwartungsprotokolle bereits eine Möglichkeit zur Kommunikation mit Funkzugangspunkten, die vorliegend zur Übermittlung der Angaben, die für die Bestandteile der Lokalisierungsinformationen repräsentativ sind, genutzt werden kann. Gegebenenfalls kann ein Fernwartungsprotokoll dabei erweitert werden, wenn es die Übermittlung einer Information nicht von Vorneherein vorsieht, um es für die Übermittlung einer Information verwenden zu können.

In einer Ausführungsform der Erfindung umfasst das System weiterhin eine Lokalisierungseinrichtung, die dazu eingerichtet ist, anhand von einer in einem Endgerät erfassten Signalstärke eines Funksignals wenigstens eines Funkzugangspunkts in Abhängigkeit von den Signalmusterinformationen die Position des Endgeräts näherungsweise zu ermitteln. Dies entspricht einer Lokalisierung mittels Mustererkennung. In einer weiteren Ausführungsform umfasst das System weiterhin eine Lokalisierungseinrichtung, die dazu eingerichtet ist, anhand von in einem Endgerät erfassten Signalstärken von Funksignalen von wenigstens drei Funkzugangspunkten in Abhängigkeit von Informationen über die Sendeleistungen der Funkzugangspunkte die Position des Endgeräts näherungsweise zu ermitteln. Dies entspricht einer Lokalisierung mittels Lateration.

In beiden zuvor genannten Ausführungsformen kann dieselbe Lokalisierungseinrichtung verwendet werden, die über Module zur Durchführung beider Lokalisierungsverfahren verfügen kann. Die Lokalisierungseinrichtung kann in dem zu lokalisierenden Endgerät enthalten sein und mit der die Lokalisierungsinformationen bereitstellenden Einrichtung über ein Kommunikationsnetz verbunden sein. Gleichfalls kann die Lokalisierungseinrichtung beispielsweise in der die Lokalisierungsinformationen bereitstellenden Einrichtung enthalten sein. In diesem Fall kann das zu lokalisierende Endgerät Informationen über die empfangenen und zur Lokalisierung zu verwendenden Funksignale über das Kommunikationseinrichtung übermitteln.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt
- Fig. 1: eine schematische Darstellung eines Systems zum Lokalisieren von Endgeräten anhand von Funksignalen von Funkzugangspunkten und
- Fig. 2: eine schematische Veranschaulichung einer Anbindung der in der Figur 1 gezeigten Funkzugangspunkte an ein Anbieternetz und ein Weitverkehrsnetz sowie eine Lokalisierungsinformationen bereitstellende Zentraleinrichtung.

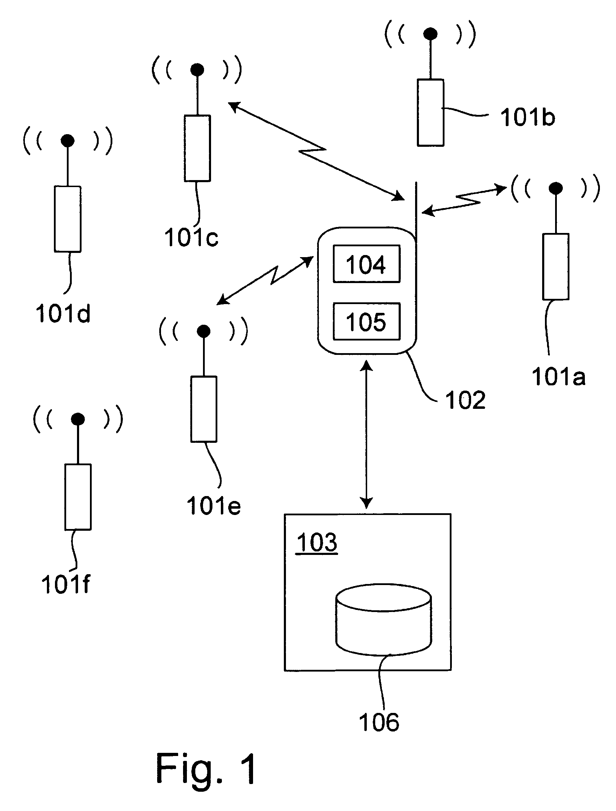

In Figur 1 ist schematisch eine Anzahl von Funkzugangspunkten 101i (in Figur 1 beispielhaft: i = a,...,f) in einem Gebiet gezeigt, in dem mobile Endgeräte 102, von denen in Figur 1 beispielhaft eines veranschaulicht ist, mithilfe von Messungen der Signale der Funkzugangspunkte 101 i lokalisiert werden können.

Die Funkzugangspunkte 101 i sind in einer Ausgestaltung Wifi- bzw. WLAN-fähige Zugangspunkte101i, die nach einem Standard der IEEE 802.11-Familie arbeiten. Die Funkzugangspunkte 101 i können beispielsweise in Wohn- oder Geschäftsräumen von Kunden eines Anbieters eines Datendienstes betrieben werden, auf den mittels der Funkzugangspunkte 101i zugegriffen werden kann. Alternativ oder ergänzend kann das in der Figur 1 gezeigte System Funkzugangspunkte 101i umfassen, die an öffentlichen Orten betrieben werden, beispielsweise in Geschäftspassagen, Bahnhöfen, Flughäfen, Messräumen, Cafes oder dergleichen.

In einer weiteren Ausführungsform handelt es sich um Funkzugangspunkte 101i eines Mobilfunknetzes. Hierbei kann es sich um von der 3GPP spezifiziertes Mobilfunknetz, insbesondere um ein 2G-, 3G- oder 4G-Netz handeln. Die Funkzugangspunkte 101 i können in dieser Ausführungsform Micro- oder Pico-Funkzellen mit einer begrenzten räumlichen Ausdehnung erzeugen. Dabei können die Funkzugangspunkte 101 i gleichfalls in Innenräumen in Wohn- oder Geschäftsräumen oder öffentlichen Räumen der zuvor genannten Art installiert sein, um die Mobilfunkabdeckung dort zu verbessern.

Es ist gleichfalls möglich, dass die in Betracht gezogenen Funkzugangspunkte 101i unterschiedlichen Funknetzen zugeordnet sind. So können neben einigen Wifi-Zugangspunkten 101i weitere Funkzugangspunkte 101i vorhanden sein, die einem oder mehreren Mobilfunknetzen der zuvor genannten Art zugeordnet sind.

An einer mittels einer funknetzbasierten Methode zu lokalisierenden Position empfängt ein mobiles Endgerät 102 Funksignale eines Teils der Funkzugangspunkte 101i, die zur Lokalisierung ausgewertet werden. Neben den Funksignalen der Funkzugangspunkte 101i werden zur Lokalisierung zudem Lokalisierungsinformationen herangezogen, die von einer Zentraleinrichtung 103 bereitgestellt werden. Das zu lokalisierende Endgerät 102 ist mit der Zentraleinrichtung 103 in geeigneter Weise verbunden. Die Verbindung kann beispielsweise über einen der Funkzugangspunkte 101 i hergestellt werden oder über ein in der Figur nicht gezeigtes Mobilfunknetz, in welches das Endgerät 102 eingebucht ist.

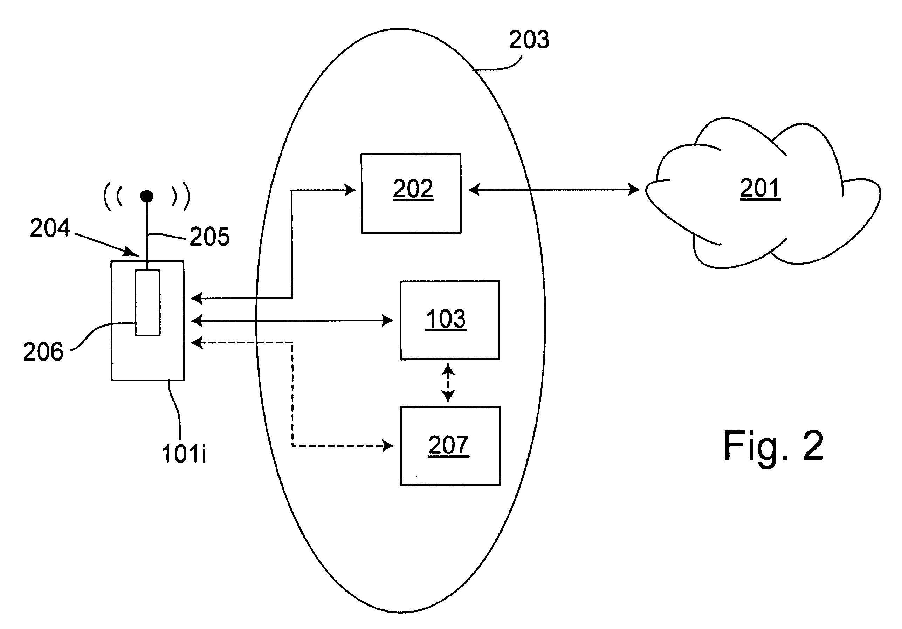

Wie die schematische Darstellung der Figur 2 für einen beispielhaften Funkzugangspunkt 101i veranschaulicht, können mit den Funkzugangspunkten 101i verbundene Endgeräte 102 über die Funkzugangspunkte 101i auf über einen Zugangsserver auf einen Kommunikations- und/oder Datendienst zugreifen. Der Zugangsserver 202 wird von einem Anbieter des Kommunikations- und/oder Datendienstes betrieben und kann sich in einem Anbieternetz 203 des Anbieters befindet. Mittels des Datendienstes kann eine Verbindung in ein Weitverkehrsnetz (WAN) 201, wie beispielsweise das Internet, hergestellt werden. Zusätzlich oder alternativ zu dem Datendienst kann ein Kommunikationsdienst für den Aufbau von Sprach- oder anderen Kommunikationsverbindungen von dem Zugangsserver 202 bereitgestellt werden, auf den über die Funkzugangspunkte 101i zugegriffen werden kann.

Wie in der Figur 2 beispielhaft für einen der Funkzugangspunkte 101 i gezeigt, verfügen die Funkzugangspunkte 101 i über eine Funkschnittstelle 204 mit einer Antenne 205 zum Senden und Empfangen von Funksignalen und einer Steuereinrichtung 206 zur Steuerung der Datenübertragung über die Antenne. Mit dem Anbieternetz 203 sind die Funkzugangspunkte 101i vorzugsweise über eine Festleitung verbunden. Die Datenübertragung kann beispielsweise über einen DSL (Digital Subscriber Line)-Anschluss erfolgen. In diesem Fall ist ein DSL-Modem in den Funkzugangspunkt 101i integriert, oder der Funkzugangspunkt 101i ist mit einem solchen DSL-Modem verbunden, mit dem über einen DSLAM (DSL Access Multiplexer) auf das Anbieternetz 203 zugegriffen wird. Gleichfalls können jedoch auch andere Übertragungstechnologien eingesetzt werden. Die Funkzugangspunkte 101i können beispielsweise von dem Anbieter des Datendienstes und Betreiber des Anbieternetzes 203 an seine Kunden ausgegeben werden oder von dem Betreiber des Anbieternetzes 203 selbst an ihren Aufstellungsorten installiert werden.

Zur Lokalisierung der Endgeräte 102 werden in einer Ausgestaltung die eingangs bereits erwähnten Signale der Funkzugangspunkte 101i herangezogen, die von den Funkzugangspunkten 101i in regelmäßigen Zeitabständen ausgesendet werden. Die Signale enthalten jeweils eine eindeutige Kennung des aussendenden Funkzugangspunkts. Die Kennung kann von einem Endgerät 102 auch dann aus dem Funksignal ausgelesen werden, wenn das Endgerät 102 nicht an dem Funkzugangspunkt 101i angemeldet ist, d.h. den Funkzugangspunkt 101i nicht für den Datenaustausch mit dem Weiterverkehrsnetz 201 bzw. dem Anbieternetz 203 nutzt. Insbesondere kann ein Endgerät 102 die Kennung auch dann auslesen, wenn es sich um einen geschützten Funkzugangspunkt 101 i handelt, bei dem die Zugriffsmöglichkeit - beispielsweise durch die Verwendung eines Passworts und/oder spezieller Endgeräte-Filter, wie etwa MAC-Filter - auf besonders berechtigte Nutzer beschränkt ist, und das Endgerät 102 keine Berechtigung für den Zugriff besitzt. Im Falle von Wifi-Zugangspunkten 101i ist das regelmäßig gesendete Funksignal das so genannte Beacon-Signal. Die eindeutige Kennung ist in diesem Fall die BSSID des Wifi-Zugangspunkts 101i. Funkzugangspunkte 101 i, die einem Mobilfunknetz zugeordnet sind, senden ein Funksignal mit einer eindeutigen Kennung auf einem Broadcast-Kanal, der jeweils von allen Endgeräten 101 in einer Funkzelle, die von einem Funkzugangspunkt 101i versorgt wird, empfangen werden kann.

Die in dem System verwendeten und lokalisierbaren Endgeräte 102 können beispielsweise als Mobiltelefone, Smartphones, Tablet-PCs, Notebookcomputer oder dergleichen ausgestaltet sein. Für die Kommunikation mit den Funkzugangspunkten 101i verfügen die Endgeräte 101 über einen oder mehrere Funkadapter 104, mit denen Funksignale der Funkzugangspunkte 101i empfangen und vorzugsweise auch Funksignale an die Funkzugangspunkte 101i übertragen werden können. Zur Auswertung der Beacon-Signale bzw. der entsprechenden Mobilfunksignale verfügt der Funkadapter 104 über eine Einrichtung zum Auslesen der enthaltenen Kennung. Ferner ist der Funkadapter 104 dazu ausgestaltet, die Signalstärke der von den Funkzugangspunkten 102 empfangenen Funksignale, zu bestimmen.

Neben dem Funkadapter 104 zur Herstellung von Verbindungen zu den Funkzugangspunkten 101i können die Endgeräte 102 ggf. weitere Kommunikationsschnittstellen für den mobilen Datenaustausch enthalten. Sofern zur Lokalisierung lediglich Wifi-Zugangspunkte herangezogen werden, kann es beispielsweise dennoch vorgesehen sein, dass die Endgeräte 102 über Funkmodule für die Verbindung mit einem Mobilfunknetz verfügen. Auf diese Weise können sich die Endgeräte 102 auch ohne Nutzung einer Datenverbindung über einen der Funkzugangspunkte 101i mit Einrichtungen in dem Weiterverkehrsnetz 201 oder dem Anbieternetz 203 verbinden - beispielsweise dann, wenn sie keine Berechtigung für die Nutzung der verfügbaren Funkzugangspunkte 101i besitzen.

Das in der Figur 1 gezeigte System umfasst weiterhin eine Zentraleinrichtung 103, welche Lokalisierungsinformationen bereitstellt, die zur Lokalisierung der Endgeräte 102 anhand der Funksignale der Funkzugangspunkte 101i herangezogen werden. Die Zentraleinrichtung 103 wird in der dargestellten Ausgestaltung von dem Anbieter des Daten- und/oder Kommunikationsdienstes in dem Anbieternetz 203 betrieben, der somit neben dem Daten- und/oder Kommunikationsdienst auch einen Lokalisierungsdienst anbieten kann. Gleichfalls kann jedoch vorgesehen sein, dass der Daten- und/oder Kommunikationsdienst und der Lokalisierungsdienst von verschiedenen Anbietern angeboten werden. Bei der Lokalisierung des Endgeräts 102 werden Daten zwischen dem Endgerät 102 und der Zentraleinrichtung 103 ausgetauscht. Wie zuvor erwähnt, kann das Endgerät 102 hierzu beispielsweise über einen der Funkzugangspunkte 101i mit der Zentraleinrichtung 103 kommunizieren oder, wie ebenfalls zuvor bereits beschrieben, über einen anderen Kommunikationsweg..

Die Lokalisierung des Endgeräts 102 erfolgt in einer Ausgestaltung durch ein Mustererkennungsverfahren. Hierbei werden in dem zu lokalisierenden Endgerät 102 die auch als RSS-Werte bezeichneten Signalstärken der von den Funkzugangspunkten 101i gesendeten Funksignale, insbesondere der Beacon-Signale von Wifi-Zugangspunkten 101 bzw. der entsprechenden Signale von Mobilfunk-Zugangspunkten 101i, bestimmt sowie die zugehörigen Kennungen der Funkzugangspunkte 101i aus den Signalen ausgelesen. Die Zusammenstellung der RSS-Werte wird hier auch als Signalmuster bezeichnet. Zur Lokalisierung des Endgeräts 102 vergleicht eine Lokalisierungseinrichtung 105 das empfangene Signalmuster mit Referenzsignalmustern, die von der Zentraleinrichtung 103 bereitgestellt werden. Den Referenzsignalmustern ist jeweils eine Position zugeordnet, an der das Referenzsignalmuster erfasst worden ist. Aus dem Vergleich zwischen dem erfassten Signalmuster und den Referenzsignalmustern ermittelt die Lokalisierungseinrichtung 105 dann näherungsweise die Position des Endgeräts 102.

Hierzu können verschiedene dem Fachmann an sich bekannte Verfahren eingesetzt werden. Beispiele für derartige Verfahren sind Nearest Neighbours in Signal Space (NNSS)-Verfahren, bei denen die Position anhand der euklidischen Distanz zwischen einem die erfassten RSS-Werte enthaltenden RSS-Vektor und die Signalstärken der Referenzsignalmuster enthaltenden RSS-Vektoren ermittelt wird. Insbesondere kann hierbei als Schätzung für die Position des Endgeräts 102 die Position bestimmt werden, die dem Referenz-RSS-Vektor mit der kleinsten euklidischen Distanz zu dem erfassten RSS-Vektor zugeordnet ist. Weitere Beispiele sind so genannte k-NNSS-Verfahren, bei denen anstelle eines einzigen Referenzmusters mit einem RSS-Vektor mit der kleinsten euklidischen Distanz zu dem erfassten Referenzwert, mehrere Referenzmuster für benachbarte Positionen - insbesondere k benachbarte Position - in die Positionsbestimmung einbezogen werden, sowie so genannte Smallest Polygon-Verfahren.

Alternativ oder ergänzend zu der Lokalisierung mittels Mustererkennung kann die Lokalisierungseinrichtung 105 eine dem Fachmann grundsätzlich bekannte Lateration durchführen, um die Position des Endgeräts 102 zu schätzen. Voraussetzung für die Lateration ist der Empfang von Funksignalen von wenigstens drei verschiedenen Funkzugangspunkten 101i in dem zu lokalisierenden Endgerät 102. Die Position des Endgeräts 102 wird bei der Lateration näherungsweise als Schnittpunkt dreier Kreise bestimmt, in deren Mittelpunkten sich jeweils ein Funkzugangspunkt 101i befindet, dessen Funksignale in dem Endgerät 102 empfangen werden. Die Radien der Kreise entsprechen jeweils dem Abstand zwischen dem Endgerät und dem betreffenden Funkzugangspunkt 101i.

Um anhand der Lateration die Position des Endgeräts zu schätzen, ermittelt das Endgerät 102 die Kennungen von wenigstens drei Funkzugangspunkten 101i, deren Funksignale in dem Endgerät 102 empfangen werden. Die Zentraleinrichtung 103 stellt dann die Positionen der Funkzugangspunkte 101i für die Lokalisierungseinrichtung 105 bereit, die beispielsweise in der Datenbank 106 zusammen mit den zugehörigen Kennungen gespeichert sein können. Wenn Funksignale von mehr als drei Funkzugangspunkten 101i in dem Endgerät 102 erfasst worden sind, dann kann vorgesehen sein, dass aus diesen Funkzugangspunkten 101 i zufällig oder nach einem vorgegebenen Kriterium drei Funkzugangspunkte 101i für die Lateration ausgewählt werden und die übrigen Funkzugangspunkte 101i nicht weiter berücksichtigt werden. Ein mögliches Kriterium kann beispielsweise vorsehen, dass nur die drei Funkzugangspunkte 101i mit den größten Signalstärken berücksichtigt werden. Die Auswahl der bei der Lateration berücksichtigten Funkzugangspunkte 101i kann bereits bei der Erfassung der Funksignale in dem Endgerät 102 vorgenommen werden, oder in der Zentraleinrichtung 103 bzw. in der Lokalisierungseinrichtung 105.

Die bei der Lateration als Kreisradien herangezogenen Abstände zwischen dem Endgerät 102 und den zu berücksichtigten Funkzugangspunkten 101 i werden in der Lokalisierungseinrichtung 105 jeweils anhand der empfangenen Signalstärke des von dem Funkzugangspunkt 101 i gesendeten Funksignals ermittelt sowie in Abhängigkeit von der Sendeleistung der Funkzugangspunkte 101i, die ebenfalls von der Zentraleinrichtung 103 bereitgestellt wird, wie weiter unten noch genauer erläutert wird. Zur Bestimmung des Abstands aus der Sendeleistung und der empfangenen Signalstärke kann die Lokalisierungseinrichtung 105 einen vorgegebenen geschätzten Zusammenhang für die Abnahme der Signalstärke in Abhängigkeit von der Entfernung zum Funkzugangspunkt 101i verwenden. Näherungsweise kann der Abstand beispielsweise unter der Annahme bestimmt werden, dass sich die Funksignale im freien Raum ausbreiteten. Sofern höchstens geringe Störungen bei der Signalausbreitung vorliegen, die sich beispielsweise aufgrund von Hindernissen auf dem Signalweg ergeben, kann auf diese Weise eine Lateration durchgeführt werden, bei der die Genauigkeit der ermittelten Position des Endgeräts 102 im Bereich von ca. 10 m oder höher liegt.

Die Lokalisierungseinrichtung 105 zur Bestimmung eines Schätzwerts für die Position des Endgeräts 102 ist bei der in der Figur 1 gezeigten Ausführungsform in dem Endgerät 102 angeordnet und kann beispielsweise als eine in einem Prozessor des Endgeräts 102 ausgeführte Software ausgestaltet sein. In dieser Ausgestaltung werden die empfangenen Kennungen von Funkzugangspunkten 101i sowie die gemessen Signalstärken innerhalb des Endgeräts 102 an die Lokalisierungseinrichtung 105 übergeben. Referenzsignalmuster und zugehörige Positionen bzw. Sendeleistungen und Positionen von erfassten Funkzugangspunkten 101i werden von der Zentraleinrichtung 103 an die Lokalisierungseinrichtung 105 in dem Endgerät 102 übermittelt. Dies geschieht beispielsweise infolge einer entsprechenden Anfrage, die von dem Endgerät 102 an die Zentraleinrichtung 103 gesendet wird. Die Auswahl der an die Lokalisierungseinrichtung 105 zu übermittelnden Daten in der Zentraleinrichtung 103 erfolgt beispielsweise auf der Grundlage der in dem Endgerät 102 empfangenen Kennungen der Funkzugangspunkte 101i, die zur Durchführung der Auswahl von dem Endgerät 102 an die Zentraleinrichtung 103 übermittelt werden können. In der Zentraleinrichtung 103 können dann beispielsweise die Sendeleistungen und Positionen der durch die übermittelten Kennungen identifizierten Funkzugangspunkte 101i bzw. die Referenzmuster mit RSS-Werten von Funksignalen dieser Funkzugangspunkte 101i und die zugehörigen Positionen an die Lokalisierungseinrichtung 105 übermittelt werden.

In einer alternativen Ausgestaltung kann die Lokalisierungseinrichtung 105 auch in der Zentraleinrichtung 103 angeordnet sein. Hierdurch kann die Lokalisierung auch bei begrenzten Rechenkapazitäten des Endgeräts 102 durchgeführt werden. In dieser Ausgestaltung sendet das Endgerät 102 die empfangenen Kennungen von Funkzugangspunkten 101 und die gemessenen Signalstärken zusammen mit einer Lokalisierungsanfrage an die Zentraleinrichtung 103. Dort berechnet die Lokalisierungseinrichtung 105 in der zuvor beschriebenen Weise die Position des Endgeräts 102 und meldet diese an das Endgerät 102 zurück.

Zur Erfassung von Bestandteilen der zur Lokalisierung des Endgeräts 102 herangezogenen Lokalisierungsinformationen werden in dem in der Figur 1 gezeigten System die Funkzugangspunkte 101i eingesetzt, die zu diesem Zweck mit der Zentraleinrichtung 103 kommunizieren können. Wie in der Figur 2 gezeigt, umfasst die Zentraleinrichtung 103 zu diesem Zweck eine Kommunikationseinheit, die dazu ausgestaltet ist, gemäß einem geeigneten Kommunikationsprotokoll mit den Funkzugangspunkten 101i zu kommunizieren und dabei in den Funkzugangspunkten 101i erfasste Lokalisierungsinformationen von den Funkzugangspunkten 101i zu erhalten.

Die von einem Funkzugangspunkt 101i an das zentrale System gemeldeten Lokalisierungsinformationen umfassen in einer Ausgestaltung die aktuelle Sendeleistung des Funkzugangspunkts 101i. Zur Angabe der Sendeleistung des Funkzugangspunkts 101 i sendet dieser Sendeleistungsdaten in einer Nachricht zusammen mit der Kennung des Funkzugangspunkts 101i an die Zentraleinrichtung 103. Die Sendeleistungsdaten können die Sendeleistung direkt angeben oder Angaben enthalten, aus denen die Zentraleinrichtung 103 die Sendeleistung ermitteln kann. So kann beispielsweise vorgesehen sein, dass die Sendeleistung an dem Funkzugangspunkt 101i als Bruchteil bzw. Prozentsatz einer gerätespezifischen maximalen Sendeleistung eingestellt werden kann. In einem solchen Fall können die Sendeleistungsdaten beispielsweise den eingestellten Bruchteil angeben. Zusätzlich kann der Funkzugangspunkt 101 i die maximale Sendeleistung angeben oder einen Gerätenamen, anhand dessen die Zentraleinrichtung 103 die maximale Sendeleistung des Geräts aus einer Tabelle ermittelt, in der die maximale Sendeleistung des Geräts angegeben ist. Aus den erhalten Angaben kann die Zentraleinrichtung 103 dann die aktuelle Sendeleistung des Funkzugangspunkts 101 i ermitteln.

In einer Ausführungsform meldet der Funkzugangspunkt 101 i die Sendeleistung anhand der Sendeleistungsdaten unabhängig von einer durchzuführenden Lokalisierung bzw. Positionsbestimmung für ein Endgerät 102 an die Zentraleinrichtung 103, und die Sendeleistung wird zusammen mit der ebenfalls gemeldeten Kennung des Funkzugangspunkts 101i in einer Datenbank 106 der Zentraleinrichtung 103 hinterlegt. Wenn die Lokalisierung eines Endgeräts 102 anhand einer Lateration unter Heranziehung der Funksignale des Funkzugangspunkt 101i vorgenommen werden soll, dann wird die Sendeleistung aus der Datenbank 106 ausgelesen und in der zuvor beschriebenen Weise der Lokalisierungseinrichtung 105 zur Lokalisierung bereitgestellt.

Die Sendeleistung ist ein Konfigurationsparameter eines Funkzugangspunktes 101 i, der verändert werden kann. Um bei den Positionsbestimmungen die jeweils aktuelle Sendeleistung des Funkzugangspunkts 101i verwenden zu können, kann vorgesehen sein, dass der Funkzugangspunkt 101i die Sendeleistung anhand entsprechender Sendeleistungsdaten in vorgegebenen - vorzugsweise regelmäßigen - Zeitintervallen an die Zentraleinrichtung 103 meldet und die Zentraleinrichtung 103 den die Sendeleistung enthaltenden Datenbankeintrag anpasst, wenn sie eine Änderung der Sendeleistung gegenüber dem zuvor gespeicherten Wert feststellt. Die regelmäßigen Meldungen können entweder von dem Funkzugangspunkt 101i initiiert werden oder aufgrund von Anforderung erfolgen, die von der Zentraleinrichtung 103 an den Funkzugangspunkt 101i gesendet werden. Wenn der Funkzugangspunkt 101i dies unterstützt, kann auch vorgesehen sein, dass lediglich Meldungen über Änderungen der Sendeleistung an die Zentraleinrichtung 101i gesendet und von der Zentraleinrichtung 103 zur Aktualisierung des betreffenden Datenbankeintrags herangezogen werden. Ein Vorteil dieser Ausgestaltung besteht darin, dass in der Zentraleinrichtung 103 stets die aktuelle Sendeleistung des Funkzugangspunkts 101i vorliegt und die erforderlichen Meldungen des Funkzugangspunkts 101i reduziert werden können.

In einer weiteren Ausgestaltung werden die Sendeleistungsdaten dann übertragen, wenn ein Endgerät 102 zu lokalisieren ist. Hierzu fordert die Zentraleinrichtung 103 vorzugsweise die Sendeleistungsdaten von dem Funkzugangspunkt 101i an, wenn sie eine Lokalisierungsanfrage eines Endgeräts 102 oder die Anfrage eines Endgeräts 102 zur Bereitstellung von Lokalisierungsinformationen für eine Lateration erhält. Aus den Sendeleistungsdaten, die der Funkzugangspunkt 101i als Antwort auf die Anforderung übermittelt, bestimmt die Zentraleinrichtung 103 die Sendeleistung des Funkzugangspunkts 101i und gibt diese an die Lokalisierungseinrichtung 105 weiter, welche die Lokalisierung durchführt. Diese Ausführungsform hat den Vorteil, dass die Sendeleistung nur dann von dem Funkzugangspunkt 101i gemeldet zu werden braucht, wenn sie für die Lokalisierung eines Endgeräts 102 benötigt wird. Grundsätzlich dauert die Bereitstellung der Sendeleistung für die Lokalisierungseinrichtung 105 jedoch länger als in dem Fall, in dem die Sendeleistungsinformationen in der Datenbank 106 hinterlegt sind.

Zur Übertragung der Sendeleistungsdaten von den Funkzugangspunkten 101i zu der Zentraleinrichtung 103 wird in einer Ausgestaltung ein Fernwartungsprotokoll eingesetzt, das für die Fernwartung von elektronischen Kommunikationsgeräten verwendbar ist. Insbesondere kann das dem Fachmann an sich bekannte Protokoll TR-069 eingesetzt werden, dessen Spezifikationen vom Broadband Forum (ehemals DSL Forum) veröffentlicht werden und das vor allem für die Fernwartung von Zugangsgeräten, wie Modems, Routern und insbesondere Funkzugangspunkten vorgesehen ist.

Durch eine Fernwartung können die Funkzugangspunkte 101i und andere Geräten mittels einer entfernten Einrichtung über den Netzanschluss der Geräte konfiguriert werden. Unter Verwendung des Fernwartungsprotokolls können dabei insbesondere Konfigurationsparameter der ferngewarteten Geräte ausgelesen und angepasst werden. Bei einem Funkzugangspunkt 101i umfassen derartige Konfigurationsparameter in der Regel auch Sendeleistungsdaten, so dass Fernwartungsprotokolle oftmals bereits eine Möglichkeit zum Auslesen der Sendeleistungsdaten vorsehen, die vorliegend genutzt werden kann. Bei dem zuvor beispielhaft genannten TR-069-Protokoll etwa ist hierfür der Parameter "InternetGatewayDevice.LANDevice.{i}.WLAN-Configuration.{i}. TransmitPower" vorgesehen. Für die Übertragung der Sendeleistungsdaten kann das Fernwartungsprotokoll "mitgenutzt" werden, ohne dass neue Schnittstellen für die Datenübertragung eingerichtet werden müssen. Die Verwendung eines Fernwartungsprotokolls für die Datenübertragung zu der Zentraleinrichtung 103 ist insbesondere dann zweckmäßig, wenn eine Fernwartung der Funkzugangspunkte 101i mittels eines Konfigurationsservers 207 vorgesehen ist, der - wie in der Figur 2 beispielhaft gezeigt - in dem Anbieternetz 203 angeordnet ist. In diesem Fall kann die Kommunikation zwischen den Funkzugangspunkten 101i und der Zentraleinrichtung 103 über den Konfigurationsserver 207 erfolgen (gestrichelte Pfeile in Figur 2).

Alternativ oder ergänzend zu den Sendeleistungsdaten können die Funkzugangspunkte 101i des in der Figur 1 gezeigten Systems Referenzmusterdaten, die zur Lokalisierung anhand einer Mustererkennung verwendet werden, an die Zentraleinrichtung 103 übermitteln. In dieser Ausgestaltung werden die Funkzugangspunkte 101i dazu eingerichtet, Funksignalmuster, welche Signalstärken von Funksignalen sowie die Kennungen umgebender Funkzugangspunkte 101i umfassen, an ihrem Aufstellungsort zu erfassen und die erfassten Funksignalmuster an die Zentraleinrichtung 103 zu melden. Die Funkzugangspunkte 101i können damit als stationäre Messeinrichtungen für die Erfassung von Referenzsignalmustern eingesetzt werden.

Zur Erfassung der Signalmusterdaten werden von einem Funkzugangspunkt 101i die Signale der umgebenden Funkzugangspunkte 101i empfangen und ausgewertet. Hierzu scannt der Funkzugangspunkt 101 i sämtliche verwendbaren Funkkanäle in ähnlicher Weise wie Kommunikationsendgeräte 102 bei der Suche nach verfügbaren Funkzugangspunkten 101i. Für den Empfang der Signale wird der Funkzugangspunkt 101i in einem Client-Modus betrieben. In diesem Modus wird die Funkschnittstelle 204 der Funkzugangspunkte 101 i für den Empfang von Funksignalen anderer Funkzugangspunkte 101 i verwendet. Dies kann insbesondere durch eine entsprechend angepasste Firmware des Funkzugangspunkts 101 i realisiert werden. Ein Beispiel für eine geeignete Firmware, die insbesondere in Wifi-Zugangspunkten 101 i eingesetzt werden kann, um die Erfassung von Funksignalsignalmustern zu ermöglichen, ist die an sich bekannte Freifunk-Firmware für Funkzugangspunkte 101i, die in so genannten Freifunknetzen eingesetzt werden.

Im Client-Modus verfügt ein Funkzugangspunkt 101i über Funktionalitäten, die auch die Funkadapter 104 von Endgeräten 102 bereitstellen, bietet jedoch üblicherweise Endgeräten 102 nicht die Möglichkeit für einen Zugriff auf den Funkzugangspunkt 101 i zum Aufbau von Datenverbindungen in das Anbieternetz 203 bzw. das Weiterverkehrsnetz 201. Daher ist vorgesehen, dass die Funkzugangspunkte 101 i lediglich kurzzeitig zur Erfassung der Signalmusterdaten im Client-Modus betrieben werden. Im Übrigen werden die Funkzugangspunkte 101i in einem "normalen" Betriebsmodus, in dem Endgeräte 102 über den Funkzugangspunkt 101 i Datenverbindungen insbesondere in das Weiterverkehrsnetz 201 aufbauen können.

In einer Ausgestaltung ist vorgesehen, dass die Funkzugangspunkte 101i die Funksignalmuster in vorgegebenen, insbesondere regelmäßigen Zeitabständen erfassen und an die Zentraleinrichtung 103 übermitteln. In der Zentraleinrichtung 103 werden die jeweils letzten von den Funkzugangspunkten 101i übermittelten Funksignalmuster als Referenzsignalmuster in der Datenbank 106 hinterlegt. Auf diese Weise kann mithilfe der Funkzugangspunkte 101i eine Datenbasis mit Referenzsignalmustern umfassenden Lokalisierungsinformationen in der Datenbank 106 erstellt werden. Auf einzelne in der Datenbank 106 gespeichert Referenzsignalmuster wird dann zugegriffen, wenn eine Lokalisierung eines Endgeräts 102 durchzuführen ist. Dabei können für eine Lokalisierung beispielsweise die Referenzsignalmuster herangezogen werden, die eine oder mehrere Kennungen eines Funkzugangspunkts 101 i enthalten, welche auch von dem Endgerät 102 an der zu lokalisierenden Position erfasst worden ist, und/oder es können die in der Datenbank 106 hinterlegten Referenzsignalmuster herangezogen werden, die von einem Funkzugangspunkt 101i gemeldet worden sind, dessen Kennung von dem Endgerät 102 an der zu lokalisierenden Position erfasst wird. Die Kennung wird vorzugsweise von dem Funkzugangsunkt 101i angegeben, wenn die Signalmusterdaten an die Zentraleinrichtung 103 übermittelt werden, und kann in der Datenbank 106 zusammen mit den Signalmusterdaten hinterlegt werden.

In einer weiteren Ausgestaltung ist zusätzlich oder alternativ zu fortlaufenden Aktualisierungen der von einem Funkzugangspunkt 101i erfassten Signalmusterdaten in der Datenbank 106 vorgesehen, dass die Funkzugangspunkte 101i die Signalmusterdaten bedarfsweise an die Zentraleinrichtung 103 melden, wenn ein Endgerät 102 zu lokalisieren ist. Hierzu kann die Zentraleinrichtung 103 die Signalmusterdaten im Bedarfsfall von einem Funkzugangspunkt 101i anfordern, der die Daten dann in einer Antwort auf die Anforderung an die Zentraleinrichtung 103 sendet, welche die Signalmusterdaten in der zuvor bereits beschriebenen Weise für die Lokalisierungseinrichtung 103 bereitstellt, welche die Lokalisierung durchführt. Die Anforderung zur Übertragung der Signalmusterdaten wird von der Zentraleinrichtung 103 vorzugsweise an die Funkzugangspunkt 101i, deren Signalmusterdaten potenziell relevant für die vorzunehmende Lokalisierung sind. Hierbei kann es sich beispielsweise um die Funkzugangspunkte handeln, deren Kennungen von dem zu lokalisierenden Endgerät 102 empfangen werden und/oder um Funkzugangspunkte 101i, weiche Funksignale von weiteren Funkzugangspunkten 101i empfangen, deren Kennung von dem zu lokalisierenden Endgerät 102 empfangen werden. Diese Kennungen können von den Funkzugangspunkten 101 i beispielsweise regelmäßig durch Scans ermittelt und an die Zentraleinrichtung 103 gemeldet werden. Gleichfalls kann die Zentraleinrichtung 103 die für die Lokalisierung potenziell relevanten Referenzsignalmuster in anderer Weise ermitteln, beispielsweise anhand einer geschätzten Position des Endgeräts 102 und der Positionen der Funkzugangspunkte 101i. Wie zuvor im Zusammenhang mit der Übertragung von Sendeleistungsdaten bereits erläutert, verringert die bedarfsabhängige Übertragung der Signalmusterdaten in der Regel einerseits die Anzahl der von den Funkzugangspunkten 101 i jeweils zu sendenden Meldungen. Andererseits wird jedoch die Zeit vergrößert, bis die Signalmusterdaten für die Lokalisierung zur Verfügung stehen.

Zur Übertragung der Funksignaldaten können wie bei der Übertragung der Signalstärkedaten Funktionalitäten genutzt werden, die auch für die Fernwartung der Funkzugangspunkte 101i verwendet werden. Insbesondere kann für die Übertragung ein Fernwartungsprotokoll, wie das zuvor genannten TR-069-Protokoll, verwendet werden, oder - wenn das Protokolls die Übertragung von Signalstärkedaten nicht bereits ermöglicht - eine Erweiterung eines solchen Protokolls. Gleichfalls können jedoch auch andere Protokolle für die Übertragung der Signalmusterdaten eingesetzt werden.

Für die Lokalisierung von Endgeräten 102 werden, wie zuvor beschrieben, neben der Sendeleistung der von dem Endgerät 102 empfangenen Funkzugangspunkte 101i bei der Lateration oder den Referenzsignalmustern bei der Lokalisierung anhand einer Mustererkennung auch Positionen von Funkzugangspunkten 101i heranzogen. Bei der Lokalisierung anhand einer Lateration sind dies die Positionen der berücksichtigten Funkzugangspunkte 101i und bei der Lokalisierung anhand einer Mustererkennung sind dies die Positionen der Funkzugangspunkte 101i, welche die bei der Lokalisierung herangezogenen Referenzsignalmuster erfasst haben. In dem in der Figur 1 gezeigten System werden die Positionen der Zugangspunkte 101i zusammen mit der Kennung und gegebenenfalls zusammen mit den von den Zugangspunkten gemeldeten Referenzsignalmusterdaten oder Sendeleistungsangaben (falls diese dauerhaft gespeichert und nicht für jede Lokalisierung abgerufen werden) in der Datenbank 106 der Zentraleinrichtung 103 gespeichert. Wenn ein Endgerät 102 zu lokalisieren ist, dann werden die Positionen der bei der Lokalisierung berücksichtigten Funkzugangspunkte 101i aus der Datenbank 106 ausgelesen und an die Lokalisierungseinrichtung 105 übermittelt, welche die Lokalisierung durchführt.

Die Erfassung der Positionen der Funkzugangspunkte 101i kann auf verschiedene Weise erfolgen. In einer Ausgestaltung werden die Positionen beispielsweise von den Nutzern bzw. Betreibern der Funkzugangspunkte 101i angegeben. Insbesondere können die Positionen aus Adressen der Aufstellungsorte ermittelt werden, die von den Nutzern angegeben werden. Diese können beispielsweise den Adressen der Wohnoder Geschäftsräume der Nutzer entsprechen, welche diese bei dem Anbieter des Datendienstes angeben, bevor die von ihnen betriebenen Funkzugangspunkte 101i zur Lokalisierung von Endgeräten 101 i verwendet werden. Die Angabe kann im Zusammenhang mit dem Lokalisierungsdienst des Anbieters gemacht werden. Es kann jedoch auch vorgesehen sein, dass die Angabe bei der Aufnahme von Kunden im Zusammenhang mit der Anmeldung zu dem Datendienst gemacht wird. Alternativ können die Positionen auch von dem Anbieter des Lokalisierungsdienstes bei der Aufstellung der Funkzugangspunkte 101 i aufgenommen werden, wenn die Funkzugangspunkte 101 i von dem Anbieter aufgestellt werden. Dies kann beispielsweise bei öffentlich zugänglichen Funkzugangspunkten 101 i der Fall sein, die von dem Anbieter betrieben werden, und bei Funkzugangspunkten 101 i von Privatleuten und Firmen, die einen Service des Anbieters für die Aufstellung der Funkzugangspunkte 101 i in Anspruch nehmen. Darüber hinaus können jedoch auch anderen Varianten für die Erfassung der Positionen der Funkzugangspunkte 101i implementiert werden, wenn diese sich als zweckmäßiger erweisen sollten. Zur Bestimmung der Positionen der Funkzugangspunkte 101i aus den Adressen der Aufstellungsorte wird vorzugsweise eine dem Fachmann an sich bekannte Geocodierung durchgeführt, bei in einem geeigneten Koordinatensystem die Koordinaten der Adressen ermittelt werden.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen.

In den Patentansprüchen angegebene Bezugszeichen sind nicht als Beschränkungen der eingesetzten Mittel und Schritte anzusehen.

### Bezugszeichen

- 101i: Funkzugangspunkt
- 102: Endgerät
- 103: Zentraleinrichtung
- 104: Funkadapter
- 105: Lokalisierungseinrichtung
- 106: Datenbank

- 201: Weitverkehrsnetz
- 202: Zugangsserver
- 203: Anbieternetz
- 204: Funkschnittstelle
- 205: Antenne
- 206: Steuereinrichtung
- 207: Konfigurationsserver

## Patentansprüche

1. System zum Lokalisieren eines Endgeräts mithilfe von in dem Endgerät empfangenen Funksignalen von Funkzugangspunkten, umfassend eine Einrichtung zum Bereitstellen von Lokalisierungsinformationen betreffend die Funksignale der Funkzugangspunkte, wobei die Lokalisierungsinformationen zur Lokalisierung des Endgeräts verwendbar sind, und weiterhin umfassend wenigstens einen ersten Funkzugangspunkt, der über eine Kommunikationsverbindung mit der Einrichtung verbunden ist und dazu eingerichtet ist, Angaben, die für Bestandteilte der Lokalisierungsinformationen repräsentativ sind, an die Einrichtung zu übermitteln, **dadurch gekennzeichnet dass**
die Lokalisierungsinformationen Signalmusterinformationen umfassen, welche eine empfangene Signalstärke eines Signals wenigstens eines anderen Funkzugangspunkts und/oder eine empfangene Kennung des anderen Funkzugangspunkts enthalten, und wobei der erste Funkzugangspunkt dazu eingerichtet ist, die Signalmusterinformationen zu erfassen und an die Einrichtung zu übermitteln.

2. System nach Anspruch 1, wobei der erste Funkzugangspunkt in einem ersten Betriebsmodus betreibbar ist, in dem er als Zugangspunkt zu einem Kommunikationsnetz dient, und wobei der erste Funkzugangspunkt in einem zweiten Betriebsmodus betreibbar ist, in dem die Signalmusterinformationen erfassbar sind.

3. System nach einem der vorangegangenen Ansprüche, wobei die Lokalisierungsinformationen Informationen über eine Sendeleistung des ersten Funkzugangspunkts enthalten und wobei der erste Funkzugangspunkt dazu eingerichtet ist, eine Angabe, die repräsentativ für die Sendeleistung des Funkzugangspunkts ist, an die Einrichtung zu übermitteln.

4. System nach einem der vorangegangenen Ansprüche, wobei der erste Funkzugangspunkt dazu ausgestaltet ist, die Signalmusterinformationen und/oder die für die Sendeleistung repräsentativen Angaben in vorgegebenen, insbesondere regelmäßigen Zeitabständen an die Einrichtung zu melden.

5. System nach einem der vorangegangenen Ansprüche, wobei der erste Funkzugangspunkt dazu ausgestaltet ist, die Signalmusterinformationen und/oder die für die Sendeleistung repräsentativen Angaben aufgrund einer Aufforderung der Einrichtung an die Einrichtung zu übermitteln.

6. System nach Anspruch 5, wobei die Einrichtung dazu ausgestaltet ist, die Aufforderung aufgrund einer durchzuführenden Lokalisierung eines Endgeräts an den ersten Funkzugangspunkt zu übermitteln.

7. System nach einem der vorangegangenen Ansprüche, wobei die Lokalisierungsinformationen zusätzlich eine Angabe der Position des ersten Funkzugangspunkts umfassen.

8. System nach Anspruch 7, wobei die Positionsangabe aus einer Adresse eines Nutzers des ersten Funkzugangspunkts ermittelt wird, wobei die Adresse aus einer Nutzerdatenbank ausgelesen wird.

9. System nach einem der vorangegangenen Ansprüche, wobei die für Bestandteile der Lokalisierungsinformationen repräsentativen Angaben zumindest teilweise mittels eines Fernwartungsprotokolls von dem Funkzugangspunkt an die Einrichtung übermittelt werden.

10. System nach einem der vorangegangenen Ansprüche, weiterhin umfassend eine Lokalisierungseinrichtung, die dazu eingerichtet ist, anhand von einer in dem Endgerät erfassten Signalstärke eines Funksignals wenigstens eines Funkzugangspunkts in Abhängigkeit von den Signalmusterinformationen die Position des Endgeräts näherungsweise zu ermitteln

11. System nach einem der vorangegangenen Ansprüche, weiterhin umfassend eine Lokalisierungseinrichtung, die dazu eingerichtet ist, anhand von in einem Endgerät erfassten Signalstärken von Funksignalen von wenigstens drei Funkzugangspunkten in Abhängigkeit von Informationen über die Sendeleistungen der Funkzugangspunkte die Position des Endgeräts näherungsweise zu ermitteln.

12. System nach einem der vorangegangenen Ansprüche, wobei die Funkzugangspunkte als Wifi-Zugangspunkte und/oder als Funkzugangspunkte zu einem Mobilfunknetz ausgebildet sind.

13. Verfahren zum Erfassen von Lokalisierungsinformationen betreffend Funksignale von Funkzugangspunkten, wobei die Lokalisierungsinformationen von einer Einrichtung bereitstellbar und zur Lokalisierung des Endgeräts mittels der Funksignale der Funkzugangspunkten verwendbar sind, wobei ein erster Funkzugangspunkt Angaben, die für Bestandteile der Lokalisierungsinformationen repräsentativ sind, über eine Kommunikationsverbindung an die Einrichtung übermittelt, wobei die Lokalisierungsinformationen Signalmusterinformationen umfassen, welche eine empfangene Signalstärke eines Signals wenigstens eines anderen Funkzugangspunkts und/oder eine empfangene Kennung des anderen Funkzugangspunkts enthalten, und wobei der erste Funkzugangspunkt die Signalmusterinformationen erfasst und an die Einrichtung übermittelt.

## Claims

1. System for localizing a terminal by using radio signals received in the terminal from radio access points, comprising a device for providing localization information relating to the radio signals from the radio access points, wherein the localization information can be used to localize the terminal, and furthermore comprising at least one first radio access point, which is connected to the device via a communication link and is set up to transmit details, which are representative of parts of the localization information, to the device, **characterized in that**
the localization information comprises signal pattern information, which includes a received signal intensity of a signal of at least one other radio access point and/or a received identifier of the other radio access point, and wherein the first radio access point is set up to capture the signal pattern information and to transmit it to the device.

2. System according to claim 1, wherein the first radio access point can be operated in a first operating mode, in which it serves as access point to a communication network, and wherein the first radio access point can be operated in a second operating mode, in which the signal pattern information can be captured.

3. System according to any one of the preceding claims, wherein the localization information includes information relating to a transmission power of the first radio access point, and wherein the first radio access point is set up to transmit a detail, which is representative of the transmission power of the radio access point, to the device.

4. System according to any one of the preceding claims, wherein the first radio access point is designed to report the signal pattern information and/or the indications, which are representative of the transmission power, to the device in predefined, in particular regular time intervals.

5. System according to any one of the preceding claims, wherein the first radio access point is designed to transmit the signal pattern information and/or the indications, which are representative of the transmission power, to the device on the basis of a request from the device.

6. System according to claim 5, wherein the device is designed to transmit the request to the first radio access point on the basis of a localization of a terminal, which is to be carried out.

7. System according to any one of the preceding claims, wherein the localization information additionally comprises an indication of the position of the first radio access point.

8. System according to claim 7, wherein the position indication is determined from an address of a user of the first radio access point, wherein the address is read out from a user database.

9. System according to any one of the preceding claims, wherein the indications, which are representative of parts of the localization information, are transmitted at least partially from the radio access point to the device by means of a remote maintenance protocol.

10. System according to any one of the preceding claims, furthermore comprising a localization device, which is set up to approximately determine the position of the terminal by means of a signal intensity of a radio signal of at least one radio access point captured in the terminal as a function of the signal pattern information.

11. System according to any one of the preceding claims, furthermore comprising a localization device, which is set up to approximately determine the position of the terminal by means of signal intensities of radio signals of at least three radio access points captured in a terminal as a function of information relating to the transmission power of the radio access points.

12. System according to any one of the preceding claims, wherein the radio access points are embodied as WiFi access points and/or as radio access points to a mobile radio network.

13. Method for capturing localization information relating to radio signals of radio access points, wherein the localization information can be provided by a device and can be used to localize the terminal by means of the radio signals of the radio access points, wherein a first radio access point transmits details, which are representative of parts of the localization information, to the device via a communication link, wherein the localization information comprises signal pattern information, which includes a received signal intensity of a signal of at least one other radio access point and/or a received identifier of the other radio access point, and wherein the first radio access point captures the signal pattern information and transmits it to the device.

## Revendications

1. Système de localisation d'un terminal à l'aide de signaux radio de points d'accès radio reçus dans le terminal, comprenant un dispositif de mise à disposition d'informations de localisation concernant les signaux radio des points d'accès radio, les informations de localisation pouvant être utilisées pour localiser le terminal, et comprenant en outre au moins un premier point d'accès radio qui est connecté au dispositif via une liaison de communication et est configuré pour transmettre au dispositif des indications représentatives d'éléments des informations de localisation, **caractérisé en ce que**
les informations de localisation comprennent des informations sur des modèles de signaux qui contiennent une intensité de signal reçue d'un signal d'au moins un autre point d'accès radio et/ou un identifiant reçu de l'autre point d'accès radio, et le premier point d'accès radio étant configuré pour détecter les informations sur des modèles de signaux et les transmettre au dispositif.

2. Système selon la revendication 1, le premier point d'accès radio pouvant être exploité dans un premier mode de fonctionnement dans lequel il sert de point d'accès à un réseau de communication et le premier point d'accès radio pouvant être exploité dans un deuxième mode de fonctionnement dans lequel les informations sur des modèles de signaux peuvent être détectées.

3. Système selon l'une des revendications précédentes, les informations de localisation contenant des informations sur une puissance d'émission du premier point d'accès radio et le premier point d'accès radio étant configuré pour transmettre au dispositif une indication représentative de la puissance d'émission du point d'accès radio.

4. Système selon l'une des revendications précédentes, le premier point d'accès radio étant conçu pour signaler au dispositif, à intervalles de temps prédéterminés et, plus particulièrement, réguliers, les informations sur des modèles de signaux et/ou les indications représentatives de la puissance d'émission.

5. Système selon l'une des revendications précédentes, le premier point d'accès radio étant conçu pour transmettre au dispositif les informations sur des modèles de signaux et/ou les indications représentatives de la puissance d'émission sur la base d'une invitation du dispositif.

6. Système selon la revendication 5, le dispositif étant conçu pour transmettre l'invitation au premier point d'accès radio sur la base d'une localisation d'un terminal à effectuer.

7. Système selon l'une des revendications précédentes, les informations de localisation comprenant en outre une indication de la position du premier point d'accès radio.

8. Système selon la revendication 7, l'indication de position étant déterminée à partir d'une adresse d'un utilisateur du premier point d'accès radio, l'adresse étant extraite d'une base de données d'utilisateurs.

9. Système selon l'une des revendications précédentes, les indications représentatives d'éléments des informations de localisation étant transmises du point d'accès radio au dispositif au moins en partie au moyen d'un protocole de télémaintenance.

10. Système selon l'une des revendications précédentes, comprenant en outre un dispositif de localisation qui est configuré pour déterminer au moins approximativement la position du terminal à l'aide d'une intensité de signal, détectée dans le terminal, d'un signal radio d'au moins un point d'accès radio en fonction des informations sur des modèles de signaux.

11. Système selon l'une des revendications précédentes, comprenant en outre un dispositif de localisation qui est configuré pour déterminer approximativement la position du terminal, à l'aide d'intensités de signaux radio d'au moins trois points d'accès radio détectées dans un terminal, en fonction d'informations sur les puissances d'émission des points d'accès radio.

12. Système selon l'une des revendications précédentes, les points d'accès radio étant réalisés en tant que points d'accès wifi et/ou en tant que points d'accès radio à un réseau radio mobile.

13. Procédé de détection d'informations de localisation concernant des signaux radio de points d'accès radio, les informations de localisation pouvant être mises à disposition par un dispositif et être utilisées pour localiser le terminal au moyen des signaux radio des points d'accès radio, un premier point d'accès radio transmettant au dispositif, via une liaison de communication, des indications représentatives d'éléments des informations de localisation, les informations de localisation comprenant des informations sur des modèles de signaux qui contiennent une intensité de signal reçue d'un signal d'au moins un autre point d'accès radio et/ou un identifiant reçu de l'autre point d'accès radio, et le premier point d'accès radio détectant les informations sur des modèles de signaux et les transmettant au dispositif.
